(19) Europäisches Patentamt
European Patent Office
Office européen des brevets

(11) **EP 3 627 510 B1**

(12) **FASCICULE DE BREVET EUROPEEN**

(45) Date de publication et mention
de la délivrance du brevet:
**30.10.2024 Bulletin 2024/44**

(21) Numéro de dépôt: **19198138.0**

(22) Date de dépôt: **18.09.2019**

(51) Classification Internationale des Brevets (IPC):
**G10L 21/0232** (2013.01)      G10L 15/20 (2006.01)
G06N 3/08 (2023.01)

(52) Classification Coopérative des Brevets (CPC):
**G10L 21/0232;** G06N 3/08; G10L 15/20

(54) **FILTRAGE D'UN SIGNAL SONORE ACQUIS PAR UN SYSTEME DE RECONNAISSANCE VOCALE**

FILTERUNG EINES TONSIGNALS, DAS DURCH EIN STIMMERKENNUNGSSYSTEM ERFASST WURDE

FILTERING OF AN AUDIO SIGNAL ACQUIRED BY A VOICE RECOGNITION SYSTEM

(84) Etats contractants désignés:
AL AT BE BG CH CY CZ DE DK EE ES FI FR GB GR HR HU IE IS IT LI LT LU LV MC MK MT NL NO PL PT RO RS SE SI SK SM TR

(30) Priorité: **20.09.2018 FR 1858536**

(43) Date de publication de la demande:
**25.03.2020 Bulletin 2020/13**

(73) Titulaire: **Sagemcom Broadband SAS**
**92270 Bois-Colombes (FR)**

(72) Inventeur: **Berger, Jérôme**
**92500 RUEIL MALMAISON (FR)**

(74) Mandataire: **Cabinet Boettcher**
**5, rue de Vienne**
**75008 Paris (FR)**

(56) Documents cités:
WO-A1-2017/218386

• ERKELENS J S ET AL: "Minimum Mean-Square Error Estimation of Discrete Fourier Coefficients With Generalized Gamma Priors", IEEE TRANSACTIONS ON AUDIO, SPEECH AND LANGUAGE PROCESSING, IEEE, US, vol. 15, no. 6, 1 August 2007 (2007-08-01), pages 1741 - 1752, XP011187708, ISSN: 1558-7916, DOI: 10.1109/TASL.2007.899233

• BABAFEMI O. ODELOWO ET AL: "A Noise Prediction and Time-Domain Subtraction Approach to Deep Neural Network Based Speech Enhancement", 2017 16TH IEEE INTERNATIONAL CONFERENCE ON MACHINE LEARNING AND APPLICATIONS (ICMLA), 18 December 2017 (2017-12-18), pages 372 - 377, XP055585900, ISBN: 978-1-5386-1418-1, DOI: 10.1109/ICMLA.2017.0-133

• LI XIAOFEI ET AL: "Non-stationary noise power spectral density estimation based on regional statistics", 2016 IEEE INTERNATIONAL CONFERENCE ON ACOUSTICS, SPEECH AND SIGNAL PROCESSING (ICASSP), IEEE, 20 March 2016 (2016-03-20), pages 181 - 185, XP032900587, DOI: 10.1109/ICASSP.2016.7471661

• HENDRIKS R C ET AL: "Noise Tracking Using DFT Domain Subspace Decompositions", IEEE TRANSACTIONS ON AUDIO, SPEECH AND LANGUAGE PROCESSING, IEEE, US, vol. 16, no. 3, 12 February 2008 (2008-02-12), pages 541 - 553, XP011329045, ISSN: 1558-7916, DOI: 10.1109/TASL.2007.914977

• COHEN I: "Noise spectrum estimation in adverse environments: improved minima controlled recursive averaging", IEEE TRANSACTIONS ON SPEECH AND AUDIO PROCESSING, IEEE SERVICE CENTER, NEW YORK, NY, US, vol. 11, no. 5, 26 August 2003 (2003-08-26), pages 466 - 475, XP011100006, ISSN: 1063-6676, DOI: 10.1109/TSA.2003.811544

EP 3 627 510 B1

**Description**

**Domaine Technique**

La présente invention se rapporte de manière générale au traitement numérique d'un signal sonore. Elle concerne plus particulièrement un procédé de filtrage d'un signal sonore acquis par un système de reconnaissance vocale.
L'invention trouve des applications, en particulier, dans le domaine des systèmes de reconnaissance vocale capables de détecter et d'interpréter une commande prononcée par un utilisateur.

**Arrière-plan Technologique**

L'utilisation de systèmes de reconnaissance vocale est aujourd'hui largement répandue. Elle permet notamment aux utilisateurs d'un dispositif qui en est équipé de le commander sans recourir à un une interface manuelle comme des boutons, un clavier, un écran tactile ou un boîtier de télécommande. L'utilisateur peut ainsi activer une fonctionnalité ou un service du dispositif par la voix, simplement en prononçant un ou plusieurs mot(s) définissant une commande ou instruction, et qui sont reconnus et interprétés par le système.
En particulier, un tel système de reconnaissance vocale doit, dans un premier temps, détecter et reconnaître un mot-clef, pour ensuite écouter et interpréter la commande prononcée par l'utilisateur à la suite de ce mot-clef. L'utilisateur prononce donc un mot-clé spécifique au système en question pour le « réveiller » avant de prononcer des instructions adaptées au dispositif qu'il permet de commander. On connaît par exemple les mots clés : « Ok Google », « Siri » ou « Alexa » respectivement pour des dispositifs proposés par Google®, Apple® et Amazon®.
Une difficulté associée à de tels systèmes de reconnaissance vocale provient de leur capacité à isoler un mot-clef et/ou une commande dans une ambiance sonore indéterminée, assimilable à du bruit. Par exemple si l'utilisateur est en train d'écouter de la musique en même temps qu'il prononce le mot-clef ou si son entourage génère un bruit de fond qui est lui aussi capté par le système de reconnaissance vocale. Finalement, pour pouvoir offrir un bon niveau de performance dans sa capacité à reconnaître un mot ou une série de mots, un système de reconnaissance vocale doit être capable d'extraire ce ou ces mots indépendamment de l'environnement sonore (i.e., le son ambiant) dans lequel il(s) est(sont) prononcé(s).

**Art Antérieur**

Plusieurs approchent existent déjà pour essayer de réduire ou de supprimer des composantes de bruit d'un signal sonore acquis par un système de reconnaissance vocale. Ces approches visent à permettre de mieux discriminer les deux composantes du signal sonore acquis par le système. D'un côté, le signal sonore utile qui doit être exploité par le système en tant qu'instruction volontairement prononcée par un utilisateur. De l'autre côté, le bruit qui est un signal sonore inutile ne devant pas être exploité par le système et pouvant même nuire à ses performances.
Une première approche concerne les systèmes de reconnaissance vocale qui sont eux-mêmes la source d'un son ambiant. Par exemple, lorsque le système de reconnaissance vocale est intégré à une enceinte connectée qui diffuse de la musique dans l'environnement ambiant. Dans ce cas, le son émis par l'enceinte peut être soustrait du signal sonore acquis par le système afin de ne conserver que les sons d'origine externe au système et qui sont donc susceptibles de contenir des instructions vocales d'un utilisateur.
Cette approche est efficace mais ne fonctionne que dans le cas particulier (et relativement restrictif) où le système connaît précisément le son émis qui doit être traité comme du bruit du point de vue de la reconnaissance vocale à réaliser. Et ce, qu'il s'agisse d'un son généré par le dispositif lui-même ou d'un son obtenu directement d'un autre système qui le génère. En particulier le procédé ne fonctionne pas pour une source audio externe n'ayant aucune connexion directe avec le système de reconnaissance vocale. C'est le cas, par exemple, si un utilisateur écoute de la musique sur une chaîne Hi-Fi indépendante du dispositif à commander via le système de reconnaissance vocale, par exemple une installation de domotique, un téléviseur, un équipement électro-ménager, etc.
Une autre approche utilisée pour limiter le bruit lorsque le système est lui-même la source du son ambiant consiste à réduire le volume, voire à arrêter l'émission de ce son, dès que le système de reconnaissance vocale détecte un mot-clef. Ainsi, la perturbation sonore associée n'affecte plus la reconnaissance vocale lorsque l'utilisateur prononce ensuite une commande. Cette solution est par exemple utilisée par les enceintes connectées « Echo » et « Echo Dot » commercialisées par Amazon.
Cette solution ne s'applique toutefois que si le système de reconnaissance vocale peut contrôler le volume du son ambiant, et surtout elle ne permet pas d'améliorer la reconnaissance du mot-clef lui-même puisque le volume du son ambiant n'est réduit qu'après sa détection et sa reconnaissance.
D'autres approches de réduction du bruit, plus perfectionnées, s'appuient sur l'utilisation d'un modèle définissant les caractéristiques du bruit ambiant, appelé modèle de bruit, pour pouvoir le réduire le plus efficacement possible. Ces approches sont donc d'autant plus performantes qu'elles s'appuient sur un modèle de bruit le plus juste possible. Classiquement, ces approches reposent sur l'utilisation de deux types de modèles différents pour établir la réponse du filtre.

D'un côté, les modèles paramétriques, où les caractéristiques du bruit sont données par une fonction mathématique dépendant d'un petit nombre de paramètres. Des paramètres tels que l'amplitude du signal de bruit à une fréquence acoustique donnée et la pente caractérisant l'évolution de cette amplitude en fonction de la fréquence. On parle par exemple de bruit « blanc » pour un bruit dont la pente est nulle, de bruit « rose » pour un bruit dont la pente est de 10 décibels par décade et de bruit « brun » pour un bruit dont la pente est de 20 décibels par décade. Comme le nombre de paramètres est réduit, il est facile pour l'utilisateur de fixer les paramètres du modèle. Il est aussi possible, dans la limite d'une évolution faible, d'apprendre ces paramètres au cours de l'application de la réponse du filtre au signal sonore acquis.

De l'autre côté, les modèles appris, où les caractéristiques du bruit sont obtenues en analysant une séquence temporelle de signal supposée ne contenir que du bruit. C'est-à-dire aucun signal sonore utile. Ces modèles sont généralement plus précis que les modèles paramétriques, mais ils exigent une intervention de l'utilisateur qui doit indiquer au système quelle séquence du signal sonore ne comporte que du bruit afin que le système puisse l'analyser et en extraire les caractéristiques du bruit attendu.

Quel que soit le modèle utilisé, il est exploité par une fonction de filtrage spécifique pour établir la réponse d'un filtre appliqué ensuite au signal sonore acquis. Dit autrement, le modèle de bruit, décrit par une fonction $\lambda_d(k)$ qui définit l'amplitude moyenne du bruit pour chaque fréquence d'indice k dans le spectre fréquentiel considéré pour le signal sonore, est utilisé par la fonction de filtrage pour déterminer la réponse exacte du filtre.

L'application d'un tel filtre consiste donc classiquement en la réalisation d'un ensemble d'étapes décrites ci-dessous :

- découper (ou séquencer) le signal d'entrée en séquence temporelles (on parle aussi de blocs) d'une durée inférieure à la durée du signal sonore acquis. Typiquement, des séquences temporelles de quelques millisecondes ou dont la durée est déterminée par le nombre d'échantillons contenus dans une séquence que la fonction de filtrage utilise par la suite. Par exemple, on peut utiliser 4096 (c'est-à-dire $2^{12}$) échantillons.
- appliquer une transformation de Fourrier à chacune des séquences. De manière bien connue de l'homme du métier, la transformée de Fourrier transforme le signal du domaine temporel y(t) en signal fréquentiel $\mathbf{Y}_k$ d'amplitude $|\mathbf{Y}_k|$ pour chaque fréquence d'indice k.
- calculer, pour chaque fréquence k, la réponse du filtre $H_k = C(\mathbf{Y}_k)$, où $C$ est une fonction de filtrage qui dépend du modèle de bruit $\lambda_d(k)$.
- appliquer le filtre au signal en réalisant un produit de la réponse du filtre par le signal et appliquer ensuite une transformation de Fourrier inverse pour obtenir un signal filtré de sorte que :

$$\tilde{y}(t) = IFFT(H_k \times \mathbf{Y}_k)$$

où IFFT désigne l'opérateur de la transformée de Fourrier rapide inverse (de l'anglais « *Inverse Fast Fourier Transform* »).

Parmi les fonctions de filtrage de bruit connues, on trouve notamment les fonctions dites fonctions dénoyauteuses et la fonction dite d'Ephraim et Malah. Ces fonctions sont détaillées ci-après.

Les fonctions dénoyauteuses sont celles utilisées lorsqu'un filtre de réduction du bruit dit filtre dénoyauteur (ou « *Coring filter* » en anglais) est appliqué à un signal sonore donné. Un tel filtre repose sur la comparaison du niveau du signal sonore acquis et du niveau attendu selon le modèle de bruit utilisé par la fonction. Si le niveau du signal sonore est sensiblement plus élevé (au-delà d'un seuil) que le niveau de bruit attendu, alors le signal est considéré comme ne comportant que peu ou pas de bruit et n'est donc pas ou peu filtré. A l'inverse, si le niveau du signal sonore acquis est sensiblement plus faible que le niveau de bruit attendu, le signal est filtré.

Toutes ces fonctions ont en commun d'être croissante et telles que C(0) = 0 et C($\infty$) = 1, où le signe « $\infty$ » désigne les valeurs à l'infini. A titre d'exemple, quelques fonctions dénoyauteuses connues sont listées ci-dessous :

- La fonction de seuil est une fonction telle que le signal est supprimé (i.e. mis à zéro) pour toute amplitude du signal à filtrer inférieure à un seuil déterminé $\tau$ (une valeur d'amplitude donnée) et conservé à l'identique pour toute amplitude du signal à filtrer supérieure à ce seuil. Autrement dit : C($Y_k$) = 0 si $|Y_k|$ est inférieure ou égal à $\tau$ et C($Y_k$) = 1 autrement :

$$C(\mathbf{Y}_k) = \begin{cases} 0 & \text{si } |\mathbf{Y}_k| \leq \tau \\ 1 & \text{si } |\mathbf{Y}_k| > \tau \end{cases}$$

- La fonction d'atténuation est une fonction telle que le signal est diminué d'une valeur constante $\tau$ pour toute amplitude du signal à filtrer supérieure à un seuil déterminé $\tau$. Autrement dit : $C(Y_k) = 0$ si $|Y_k|$ est inférieure ou égal à $\tau$ et $C(Y_k) = (|Y_k| - \tau) / |Y_k|$ autrement :

$$C(\mathbf{Y}_k) = \begin{cases} 0 & \text{si } |\mathbf{Y}_k| \leq \tau \\ \frac{|\mathbf{Y}_k| - \tau}{|\mathbf{Y}_k|} & \text{si } |\mathbf{Y}_k| > \tau \end{cases}$$

- La fonction de seuil doux est une fonction de seuil modifiée pour de ne pas créer une discontinuité dans la fonction au niveau de la valeur de seuil. Elle peut être décrite par la formule :

$$C(\mathbf{Y}_k) = 1 - e^{-\left(\frac{|\mathbf{Y}_k|}{\tau}\right)^2}$$

- La fonction d'atténuation douce évolue de manière similaire à la fonction d'atténuation standard pour les signaux de forte amplitude mais présente une évolution plus douce pour les valeurs d'amplitude faibles. Elle peut être décrite par la formule suivante :

$$C(\mathbf{Y}_k) = \frac{|\mathbf{Y}_k|}{|\mathbf{Y}_k| + \tau}$$

Les fonctions dénoyauteuses dépendent donc toutes d'un seuil $\tau$ dont la détermination découle elle-même du modèle de bruit $\lambda_d(k)$ utilisé par la fonction concernée. Par exemple, le seuil $\tau$ peut être égal à $\lambda_d(k)$.

La fonction d'Ephraim et Malah est celle utilisée lorsqu'un filtre de réduction du bruit dit filtre d'Ephraim et Malah est appliqué à un signal sonore donné. Le filtre d'Ephraim et Malah est un filtre de réduction de bruit modélisé décrit dans l'article « Speech enhancement using a minimum mean-square error short-time spectral amplitude estimator », Y. Ephraim et D. Malah, IEEE Transactions on Acoustics, Speech, and Signal Processing, vol. ASSP-32, no. 6, pp. 1109-1121, Déc. 1984.

Ce filtre suppose connus un modèle de bruit $\lambda_d(k)$ et, additionnellement, un modèle du signal $\lambda_x(k)$ qui définit l'amplitude moyenne du signal sonore utile pour chaque fréquence d'indice k. Les étapes réalisées lors de l'application d'un tel filtre sont identiques à celles réalisées pour un filtre dénoyauteur. L'unique différence réside dans la façon dont est calculée la réponse du filtre $H_k$, autrement dit, dans la fonction de filtrage utilisée. En effet, dans le cas du filtre d'Ephraim et Malah, la réponse du filtre $H_k$ est décrite par la formule :

$$H_k = \frac{\sqrt{\pi v_k}}{2\gamma_k}\left[(1 + v_k)I_0\left(\frac{v_k}{2}\right) + v_k I_1\left(\frac{v_k}{2}\right)\right] e^{\frac{-v_k}{2}}$$

où : $v_k = \frac{\xi_k}{1+\xi_k}\gamma_k$ ; $\xi_k = \frac{\lambda_x(k)}{\lambda_d(k)}$ ; $\gamma_k = \frac{|\mathbf{Y}_k|^2}{\lambda_d(k)}$ ; et,

où $I_0$ et $I_1$ sont les fonctions de Bessel modifiées d'ordre 0 et 1, respectivement.

Il est par ailleurs connu qu'une approximation plus simple de cette formule, décrite dans l'article « Simple alternatives to the Ephraim and Malah suppression rule for speech enhancement », P.J. Wolfe et S.J. Godsill, IEEE Workshop on Statistical Signal Processing, pp. 496-499, 2001, peut aussi être utilisée pour calculer la réponse d'un tel filtre.

Dans tous les cas, outre les difficultés liées à l'établissement d'un modèle de bruit pertinent, ces solutions utilisées pour filtrer le bruit sont généralement limitées au traitement de bruits dits stationnaires, c'est-à-dire de bruits dont les caractéristiques n'évoluent pas au cours du temps. Ces solutions sont donc bien adaptées pour réduire le bruit lié à un effet de souffle ou un bruit de fond relativement constant tel que celui généré par une foule. En revanche, elles sont inadaptées aux cas où le son ambiant évolue dynamiquement lors des acquisitions réalisées par le système de reconnaissance vocale.

Le document Babafemi O. Odelowo et al, « A noise prédiction and time-domain subtraction approach to deep neural network based speech enhancement », 16th IEEE International Conférence on Machine Learning and Applications (ICMLA), 18 décembre 2017, le document Li Xiaofei et al, « Non-stationary noise power spectral density estimation based on régional statistics », IEEE International Conférence on Acoustics, Speech and Signal Processing, 20 mars 2016, le document Hendriks R C et al, « Noise tracking using DFT domain subspace décompositions », IEEE Transactions on Audio, Speech and Language processing, 12 février 2008, le document Cohen I, « Noise spectrum estimation in adverse environments : improved minima controlled recursive averaging » IEEE Transactions on Speech and Audio processing, 26 août 2003, et le document WO 2017/218386 intitulé « Estimation de puissance de bruit récursive à adaptation de modèle » sont connus de l'état de la technique.

**Résumé de l'invention**

L'invention vise à supprimer, ou du moins atténuer, tout ou partie des inconvénients de l'art antérieur précités en proposant un procédé de filtrage similaire à celui utilisé par un filtre dénoyauteur ou par un filtre d'Ephraim et Malah, auquel est ajouté une étape d'apprentissage du modèle de bruit à partir d'un historique des acquisitions précédentes du signal sonore réalisées par le système de reconnaissance vocale.

A cet effet, un premier aspect de l'invention propose un procédé de filtrage, par un système de reconnaissance vocale, d'un signal sonore d'amplitude $y(t)$ en fonction du temps t, dont des séquences de M échantillons sont traitées successivement, où M est un nombre entier strictement positif déterminé, ledit filtrage étant réalisé dans le domaine fréquentiel avec un filtre numérique de réponse $H_k$ donnée qui utilise une fonction d'un modèle de bruit $\lambda_d(k)$ modélisant un bruit ambiant acquis dans le signal sonore avec la voix à reconnaître, ledit modèle de bruit $\lambda_d(k)$ donnant l'amplitude moyenne du bruit ambiant pour chaque fréquence d'indice $k$ considérée, le procédé comprenant en outre :

- la tenue à jour d'un historique de $N$ valeurs $Y_k$ du signal sonore dans le domaine fréquentiel, pour $N$ blocs d'échantillons respectifs déjà traités du signal sonore, où $N$ est un nombre entier strictement positif déterminé, et pour chaque fréquence d'indice $k$ considérée ; et,
- la tenue à jour, à chaque traitement d'un bloc d'échantillons du signal sonore et avec un prédicteur, utilisant l'historique des valeurs $Y_k$ du signal sonore dans le domaine fréquentiel, du modèle de bruit $\lambda_d(k)$ de façon à minimiser l'écart entre le modèle de bruit $\lambda_d(k)$ et l'amplitude $|Y_k|$ du signal sonore dans le domaine fréquentiel.

Avantageusement, l'invention permet d'utiliser l'historique des valeurs passées du signal sonore (stockées sous la forme de valeurs numériques converties dans le domaine fréquentiel) pour prédire les caractéristiques du signal en cours d'acquisition et s'appuie sur cette prédiction pour établir le modèle de bruit utilisé par la fonction de filtrage. La réponse de filtre calculée par la fonction de filtrage utilisant ce modèle est ensuite appliquée au signal sonore acquis, en sorte que le signal sonore ainsi filtré ne conserve que les composantes utiles au système de reconnaissance vocale pour reconnaître une instruction éventuelle. En effet, le signal de sortie ne conserve que les caractéristiques nouvelles du signal d'entrée, comme par exemple la voix de l'utilisateur qui prononce un mot-clef, et retire les caractéristiques prévisibles, comme par exemple une musique présente en bruit de fond dans le signal sonore acquis.

En variante ou en complément :

- le filtrage du signal sonore comprend :

  - l'initialisation de tous les éléments d'un ensemble de $N$ tableaux unidimensionnels $O_k(i)$ comprenant chacun un nombre d'éléments déterminé, où $i$ est un indice compris entre 0 et $N-1$ attribué auxdits N tableaux unidimensionnels $O_k(i)$, respectivement,
  - l'initialisation de coefficients $P$, d'un filtre prédicteur réalisant le prédicteur du modèle de bruit $\lambda_d(k)$,
  - l'acquisition par le système de reconnaissance vocale, d'une séquence de M échantillons du signal sonore $y(t)$ et l'application d'une transformation de Fourier à ladite séquence de $M$ échantillons du signal sonore de manière à obtenir une valeur $Y_k$ du signal sonore dans le domaine fréquentiel pour chaque fréquence d'indice k considérée;

  puis, pour chaque fréquence d'indice k considérée :

  - le calcul de la fonction du modèle $\lambda_d(k)$ de bruit par un prédicteur utilisant les tableaux unidimensionnels $O_k(i)$ pondérés par les coefficients $P$ ; puis,
  - la mise à jour, de la valeur des coefficients $P$ du prédicteur, selon une méthode de calcul adaptée pour minimiser l'écart entre le modèle de bruit $\lambda_d(k)$ et la valeur $Y_k$ du signal sonore dans le domaine fréquentiel ; et

- la mise à jour de l'historique des $N$ valeurs du signal sonore avec la valeur $Y_k$ du signal sonore dans le domaine fréquentiel ;
- le calcul d'une fonction $H_k$ de réponse d'un filtre, selon la formule $H_k = C(Y_k)$ où $C$ est une fonction de filtrage de bruit dépendante du modèle de bruit $\lambda_d(k)$ ;
- le calcul du produit de la fonction $H_k$ avec le signal fréquentiel $Y_k$ ; et enfin,
- l'application d'une transformation de Fourrier inverse audit produit de manière à obtenir un signal, dit signal filtré, d'amplitude $\tilde{y}(t)$ à chaque instant $t$.

- la tenue à jour de l'historique de $N$ valeurs $Y_k$ du signal sonore dans le domaine fréquentiel pour chaque fréquence d'indice k considérée comprend, à l'étape qui est réalisée successivement à chaque traitement d'un bloc respectif d'échantillons du signal sonore et pour chaque fréquence d'indice k considérée, la mise à jour de la valeur des éléments des tableaux unidimensionnels $O_k(i)$ de telle sorte que :

  - pour tout indice $i$, en partant de $i = N-2$ et ainsi de suite en descendant les valeurs de l'indice $i$ jusqu'à $i = 0$, $O_k(i+1) = O_k(i)$ ; puis après,
  - pour l'indice i égal à zéro, $O_k(0) = |Y_k|$.

- une première distribution mathématique est utilisée pour l'initialisation des coefficients P du filtre prédicteur, telle que $P(i) = 1/N$, où i est un indice compris entre 0 et $N-1$ attribué à chaque coefficient, et telle que la somme des coefficients $P(i)$ pour i compris entre 0 et $N-1$ est égale à l'unité.
- une seconde distribution mathématique est utilisée pour l'initialisation des coefficients P du filtre prédicteur, telle que $P(i) = Z \times q^i$, où $q$ est une valeur comprise entre 0 et 1 et où $Z = (1-q)/(1-q^N)$, et telle que la somme des coefficients $P(i)$ pour $i$ compris entre 0 et $N-1$ est égale à l'unité.
- le nombre M d'échantillons dans une séquence temporelle est une puissance de 2.
- la fonction $\lambda_d(k)$ du modèle de bruit est obtenue pour chaque fréquence d'indice k considérée par application de la formule $\lambda_d(k) = \sum_{i=i_0}^{N-1} P(i) \times O_k(i)$ , où $i_0$ est égal à zéro.
- la fonction $\lambda_d(k)$ du modèle de bruit est obtenue pour chaque fréquence d'indice $k$ considérée par application de la formule $\lambda_d(k) = \sum_{i=i_0}^{N-1} P(i) \times O_k(i)$ , où $i_0$ est compris entre 1 et $N$-1.
- les coefficients P définissant le filtre prédicteur du modèle de bruit $\lambda_d(k)$ sont des coefficients $P_k$ dépendant de la fréquence.
- la fonction $\lambda_d(k)$ du modèle de bruit est obtenue pour chaque fréquence d'indice k considérée, par une méthode de calcul appliquant un réseau de neurones adapté pour utiliser les tableaux $O_k(i)$ comme entrée et pour générer en sortie la fonction $\lambda_d(k)$ en utilisant et en mettant à jour des coefficients P du réseau de neurones.
- le réseau de neurones est adapté pour n'utiliser uniquement que les tableaux $O_k(i)$ pour tout $i$ supérieur à une valeur non nulle déterminée.
- la modification de la valeur des coefficients P(i) est réalisée selon une méthode de calcul appliquant la formule :

$$P(i) = P(i) + \alpha \times \sum_k O_k(i)\big(|Y_k| - \lambda_d(k)\big)$$

où $\alpha$ est un nombre réel compris entre 0 et 1.
- la mise à jour de la valeur des coefficients P est réalisée selon une méthode de calcul dite de descente de gradient avec inertie, ou selon une méthode de calcul dite méthode ADAM.
- la mise à jour des N tableaux unidimensionnels $O_k(i)$ est réalisée, dans une mémoire du système de reconnaissance vocale, par utilisation d'un tampon mémoire circulaire.
- la fonction $C$ de filtrage de bruit est une fonction dite dénoyauteuse, ou une fonction dite d'Ephraim et Malah.

Dans un second aspect, l'invention concerne un système de reconnaissance vocale comprenant au moins une unité de calcul et une mémoire configurées pour mettre en oeuvre toutes les étapes du procédé de filtrage selon le premier aspect.

Dans un troisième aspect, l'invention concerne un équipement électronique comprenant un dispositif selon le second aspect.

Dans un quatrième aspect, l'invention concerne un programme d'ordinateur comprenant des instructions qui, lorsque le programme d'ordinateur est chargé dans la mémoire d'un ordinateur et est exécuté par un processeur dudit ordinateur, causent la mise en oeuvre par l'ordinateur de toutes les étapes du procédé selon le premier aspect.

Dans un cinquième aspect, l'invention concerne un support d'enregistrement tangible, lisible par un ordinateur, sur lequel est enregistré de manière non-transitoire le programme selon le quatrième aspect.

## Brève Description des Dessins

D'autres caractéristiques et avantages de l'invention apparaîtront encore à la lecture de la description qui va suivre. Celle-ci est purement illustrative et doit être lue en regard des dessins annexés sur lesquels :

- la figure 1 est un diagramme d'étapes illustrant des modes de mise en oeuvre du procédé de filtrage selon l'invention ;
- la figure 2 est un diagramme fonctionnel d'un dispositif comprenant des moyens pour la mise en oeuvre du procédé ; et,
- la figure 3 est un schéma simplifié d'un produit électronique comprenant un système de reconnaissance vocale adapté pour mettre en oeuvre le procédé de filtrage selon l'invention.

## Description détaillée de modes de réalisation

Dans la description de modes de mise en œuvre qui va suivre et dans les Figures des dessins annexés, les mêmes éléments ou des éléments similaires portent les mêmes références numériques aux dessins.

A moins qu'il n'en soit disposé autrement, les notations suivantes seront utilisées dans la description qui suit et aux dessins :

- $y(t)$ est la valeur du signal d'entrée à l'instant $t$ ;
- $Y_k$ est la valeur du signal après transformée de Fourier pour la fréquence $k$ ;
- $N$ est le nombre de valeurs conservées dans l'historique, par exemple $N$=100, ou bien $N$ est choisi en fonction du taux d'échantillonnage du signal pour correspondre à une durée de 5 s, par exemple ;
- $O_k(i)$ représente les valeurs passées de $|Y_k|$ stockées dans l'historique ;
- P représente les coefficients du filtre prédicteur ; dans des modes de réalisation, ces coefficients ne dépendent pas de la fréquence $k$ ;
- $\lambda_d(k)$ est l'amplitude modélisée pour le bruit à la fréquence $k$ ;
- $H_k$ désigne la réponse en fréquence du filtre à appliquer sur le signal ; et,
- $\tilde{y}(t)$ est la valeur du signal de sortie à l'instant $t$.

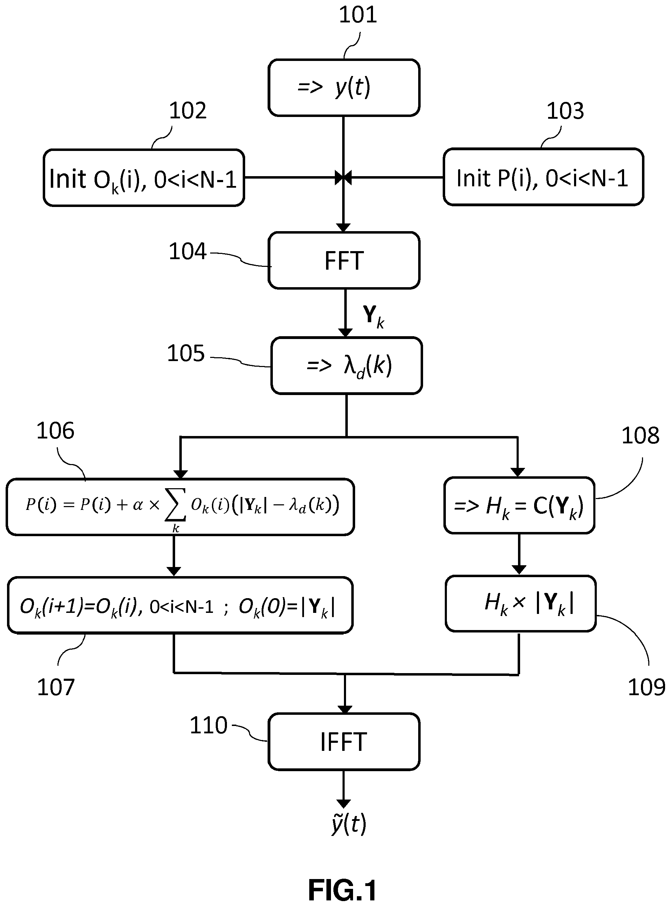

En référence au schéma de la **figure 1**, il est décrit un exemple de mise en oeuvre du procédé de filtrage selon des modes de mise en oeuvre de l'invention. Plus précisément, la Figure 1 est un diagramme d'étapes illustrant différentes étapes réalisées lors de l'exécution du procédé.

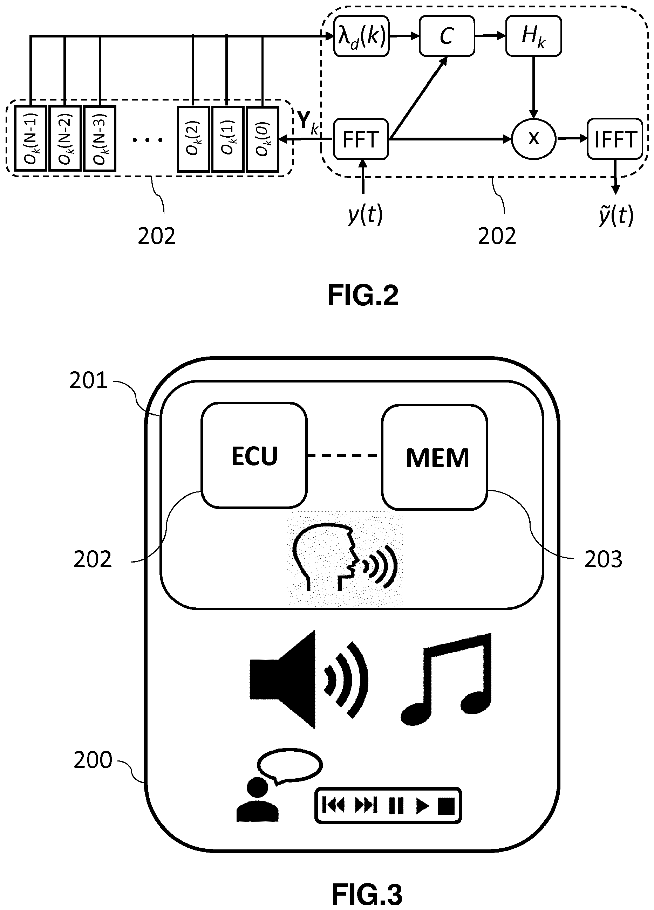

Il est noté tout d'abord que ce procédé peut être mis en oeuvre par tout système de reconnaissance vocale tel qu'il sera décrit plus loin en référence à la figure 2. Le procédé peut donc, par exemple, être mis en œuvre dans une enceinte connectée, un smartphone ou un décodeur audio/vidéo lorsque ces équipements sont à commande vocale.

L'étape 101 du procédé correspond à l'acquisition d'un signal sonore par le système de reconnaissance vocale, d'amplitude $y(t)$ à chaque instant t Cette étape consiste donc à acquérir une séquence ou bloc de $M$ échantillons consécutifs du signal $y(t)$. Dans un exemple purement exemplatif, chaque bloc comprend 4096 échantillons du signal $y(t)$.

Lorsque le système de reconnaissance vocale est actif, ce type d'acquisition a lieu de manière continue pour pouvoir réagir dès qu'une commande/instruction est prononcé par un utilisateur. Le signal sonore ainsi acquis peut comprendre la voix d'un utilisateur qui prononce un mot-clé et/ou une commande à reconnaître, mélangé à du bruit ambiant. Ce bruit ambiant peut correspondre à un effet de souffle lié à l'appareil lui-même ou à une ventilation, ou un brouhaha tel qu'on peut entendre en présence d'une foule de gens qui parlent en même temps, ou encore à une musique d'ambiance (liste non limitative), ou à tout cela à la fois. Le bruit ambiant peut présenter, en moyenne dans le temps, une certaine stationnarité en fréquence et en intensité par rapport aux mots-clés et/ou aux commandes susceptibles d'être prononcés par un utilisateur, mais l'Homme du métier appréciera que la mise en oeuvre du procédé ne requiert de faire aucune hypothèse à ce niveau.

L'étape 102 consiste à initialiser un ensemble de N tableaux unidimensionnels $O_k(i)$, où $N$ est un nombre entier positif déterminé, i est un indice compris entre 0 et $N-1$ associé à chacun des N tableaux, respectivement, et où chaque tableau $O_k(i)$ comprend un nombre total d'éléments déterminé. Ce nombre d'éléments est égal au nombre de coefficients de la transformée de Fourier d'un bloc, c'est-à-dire à la moitié du nombre d'échantillons dans un bloc. La notion de bloc utilisée ici est identique à celle décrite plus haut en référence à l'art antérieur connu.

Cette initialisation comprend par exemple l'attribution de la valeur zéro à tous les éléments de tous les tableaux unidimensionnels $O_k(i)$, pour i compris entre 0 et $N$-1. Ces tableaux constituent ainsi un historique des valeurs du signal sonore converties dans le domaine fréquentiel et codées de manière numérique. Cet historique, qui est initialement vide, est rempli et tenu à jour au fur et à mesure des acquisitions du signal sonore. De préférence, on ne stocke que les $N$ dernières valeurs du signal sonore qui ont été acquises, dites aussi valeurs passées. Autrement dit, cet historique est stocké dans une mémoire du système de reconnaissance vocale et est mis à jour avec des nouvelles valeurs après chaque nouvelle acquisition d'un signal sonore. Comme il sera discuté plus loin, pour chaque tableau $O_k(i)$ l'indice $k$ correspond à une fréquence donnée du spectre utile du signal sonore.

Selon un mode préféré de réalisation, lors de l'étape 103, des coefficients $P$, aussi appelés coefficients du filtre prédicteur, sont initialisés. Par exemple, ces coefficients sont au nombre de N et il leur est attribué à chacun un indice i correspondant à celui des tableaux $O_k(i)$. De plus, il est aussi attribué à chacun une valeur déterminée selon une distribution mathématique telle que la somme de ces N valeurs soit égale à l'unité. Une telle distribution peut être soit une distribution uniforme suivant laquelle, par exemple, $P(i) = 1/N$ pour tout i compris entre 0 et $N$-1, soit une distribution dite pondérée suivant laquelle, par exemple, $P(i) = Z \times q^i$ où $q$ est une valeur comprise entre 0 et 1 et où $Z = (1-q)/(1-q^N)$. On appréciera que, dans les deux cas ci-dessus, la somme des coefficients $P(i)$ pour i compris entre 0 et $N$-1 vaut 1.

De plus, l'homme du métier appréciera que dans ce mode de mise en oeuvre les coefficients $P(i)$ ne dépendent que de l'indice i attribué à chaque tableau $O_k(i)$, c'est-à-dire qu'ils ne dépendent pas de la fréquence considérée dans le spectre utile du signal sonore. Cette mise en oeuvre a l'avantage de la simplicité et donc de la rapidité des calculs à effectuer. Toutefois, et comme il sera aussi discuté plus en détail plus loin, dans un mode de mise en oeuvre particulier, les coefficients $P(i)$ peuvent être remplacés par des coefficients $P_k(i)$ dépendant de la fréquence, avec pour avantage une meilleure précision de filtrage. Dans ce cas aussi, et ce pour chaque fréquence d'indice $k$ donnée, la somme de toutes les valeurs attribuées lors de l'initialisation des coefficients $P_k(i)$, pour i compris entre 0 et $N$-1, est égale à 1.

Ensuite, lors de l'étape 104, une transformée de Fourier discrète est appliquée à chacune de ces séquences de manière à obtenir un signal fréquentiel $Y_k$ d'amplitude $|Y_k|$ pour chaque fréquence $k$. Comme l'Homme du métier le sait, la transformée (ou transformation) de Fourier est un outil de l'analyse mathématique qui associe à une fonction dont la variable est le temps une fonction dépendant d'une fréquence. La transformée de Fourier discrète est une variante discontinue de cette méthode qui permet d'obtenir une représentation spectrale discrète d'un signal numérique échantillonné en un nombre fini de points.

La transformée de Fourier discrète de la séquence (ou suite) des M termes y(0), y(1),...,y(M -1), est la suite de M termes Y(0), Y(1),...,Y(M-1) définis par :

$$\mathbf{Y}(\text{k}) = \mathbf{Y}_k = \sum_{m=0}^{M-1} y(m) \times e^{-j2\pi\frac{mk}{M}}$$

En pratique, les $M$ termes $y(m)$ sont $M$ échantillons du signal analogique échantillonné $y_m = y(mxT_e)$, où $T_e$ désigne la période d'échantillonnage (généralement 16, 22, 44, 48 ou 96 kHz). Et les M termes $Y(k)$, qui sont notés $Y_k$ dans la suite par commodité, correspondent à une approximation (à un facteur multiplicatif $T_e$ près) de la transformée de Fourier de ce signal aux $M$ points de fréquence $f_k = k \times f_e/N$, avec $k$ entre 0 et $M$ -1, c'est-à-dire $f$ entre 0 et $f_e$, où $f_e$ désigne la fréquence d'échantillonnage ($f_e = 1/T_e$). Dans la suite, on désigne par « fréquence d'indice $k$ », ou simplement fréquence $k$ par commodité, les points de fréquence $f_k$ précités.

Dans un exemple de mise en oeuvre, l'étape 104 du procédé peut mettre en oeuvre une transformée de Fourier discrète rapide (ou FFT, de l'anglais « *Fast Fourier Transform* »), qui est mieux adaptée aux techniques de traitement numérique mises en oeuvre par logiciel car elle utilise un algorithme de calcul efficace.

Dans un mode de mise en oeuvre du procédé, le nombre Md'échantillons peut être, par exemple, une valeur égale à une puissance entière de 2, typiquement comprise entre $2^8$ et $2^{16}$, par exemple 4096 échantillons comme indiqué plus haut. Dans un mode de mise en oeuvre du procédé, ce nombre peut être adapté en fonction de la fréquence d'échantillonnage pour obtenir des séquences d'une durée comprise entre 1 et 10 millisecondes. Ces paramètres peuvent être optimisés pour réduire au minimum la durée des calculs et donc la vitesse d'exécution du procédé.

L'étape 105 comprend le calcul, pour chaque fréquence k, d'une fonction $\lambda_d(k)$, dite modèle de bruit, en utilisant les tableaux unidimensionnels $O_k(i)$ pondérés par les coefficients $P(i)$. Ce modèle de bruit découle donc directement de l'historique des acquisitions précédentes réalisées à partir du signal sonore $y(t)$.

Dans un mode de mise en oeuvre particulier, les premières valeurs de l'historique ne sont pas utilisées. Plus précisément, un certain nombre de tableaux unidimensionnels $O_k(i)$ n'est pas pris en compte dans le calcul du modèle de bruit. Ceci permet d'améliorer la réponse aux signaux transitoires en écartant du calcul qui mène à la définition du modèle de bruit les dernières valeurs du signal sonore qui ont été acquises. Dit autrement, on réduit ainsi le risque que le début d'un mot-clé ou d'une commande qui sont prononcés par un utilisateur ne soit lui-même considéré comme du bruit pour ce qui concerne la reconnaissance de la suite et/ou de de la fin de ce qui est prononcé par l'utilisateur, ce qui pénaliserait la performance de cette reconnaissance.

Finalement dans le premier ou dans le second mode de mise en oeuvre décrits ci-dessus, la fonction $\lambda_d(k)$ peut être obtenue en effectuant le calcul suivant :

$$\lambda_d(k) = \sum_{i=i_0}^{N-1} P(i) \times O_k(i)$$

La différence provient uniquement du fait que, dans le premier cas, $i_0$ est nul (pour prendre en compte tous les tableaux) alors que, dans le second cas, $i_0$ est non-nul avec par exemple une valeur comprise entre 1 et $N$-1 (pour écarter du calcul tous les tableaux dont l'indice est inférieur à $i_0$). On appréciera que $i_0$ peut, par exemple, être choisi en fonction du taux d'échantillonnage pour correspondre à une durée légèrement supérieure à la durée attendue d'un mot-clef. L'homme du métier appréciera également que, dans le second mode de mise en oeuvre ci-dessus, il n'est pas nécessaire de calculer ni de stocker des valeurs de $P(i)$ pour $i<i_0$ puisqu'elles ne sont pas utilisées pour calculer $\lambda_d(k)$.

Comme il a déjà été dit plus haut, le calcul du modèle de bruit $\lambda_d(k)$ peut aussi utiliser, dans un mode de mise en oeuvre particulier, des coefficients de filtre prédicteur qui sont dépendants de la fréquence d'indice $k$ considérée dans la bande utile du signal sonore. Le modèle de bruit est alors obtenu par le calcul suivant :

$$\lambda_d(k) = \sum_{i=i_0}^{N-1} P_k(i) \times O_k(i)$$

Outre les méthodes de calcul du modèle de bruit déjà évoquées, l'homme du métier appréciera que d'autres méthodes de calculs peuvent être utilisées pour générer un modèle de bruit $\lambda_d(k)$ à partir d'un historique des acquisitions précédentes. Par exemple, on peut préférer une méthode de calcul basée sur l'utilisation d'un réseau de neurones, utilisant les tableaux $O_k(i)$ comme entrées. Une telle méthode ne nécessite pas l'utilisation de coefficients de filtre prédicteur pour pondérer les différents tableaux $O_k(i)$ utilisés dans le calcul mais utilise à la place des coefficients du réseau de neurones. En outre, ces coefficients sont aussi mis à jour au cours de l'apprentissage du réseau de neurones. En effet, de façon connue en soi de l'homme du métier, le réseau de neurones peut être entrainé en continu en utilisant les amplitudes $|Y_k|$ comme exemples de sorties attendues pour l'apprentissage.

Comme pour les autres méthodes de calcul, un seul et même réseau de neurones peut être utilisé pour toutes les fréquences d'indice k considérées dans le spectre fréquentiel du signal sonore ou, à l'inverse, plusieurs réseaux de neurones différents peuvent être utilisés pour chaque fréquence d'indice $k$, respectivement. De même, il est aussi possible de ne pas utiliser les premières valeurs de l'historique pour s'affranchir des phénomènes transitoires.

L'étape 106 consiste à modifier, pour chaque indice $i$, la valeur des coefficients $P(i)$, selon une méthode de calcul adaptée pour minimiser l'écart entre le modèle de bruit $\lambda_d(k)$ et le signal fréquentiel $Y_k$. Une telle minimisation peut être obtenue, par exemple, en appliquant, pour tout $i$ compris entre 0 et $N$-1, la formule suivante :

$$P(i) = P(i) + \alpha \times \sum_k O_k(i)\big(|\mathbf{Y}_k| - \lambda_d(k)\big)$$

où $\alpha$ est un nombre réel compris entre 0 et 1 qui détermine une vitesse d'apprentissage. Cette formule, utilisée pour mettre à jour les coefficients du filtre prédicteur, correspond à une formule dite de minimisation par descente de gradient, qui vise à minimiser la valeur $(|\mathbf{Y}_k|-\lambda_d(k))^2$. L'homme du métier appréciera cependant que, lors de la minimisation de l'écart global entre le modèle de bruit $\lambda_d(k)$ et le signal fréquentiel $\mathbf{Y}_k$, l'écart peut augmenter temporairement pour certaines fréquences k. En effet, les coefficients P étant indépendant de la fréquence, dans certaines circonstances il est impossible de faire baisser tous les écarts à la fois et il peut alors nécessaire de faire réduire la majorité des écarts en en laissant légèrement augmenter certains.

Par ailleurs, dans le mode de mise en oeuvre où les coefficients $P_k(i)$ dépendent de la fréquence, cette minimisation peut être réalisée selon la formule :

$$P_k(i) = P_k(i) + \alpha \times O_k(i)\big(|\mathbf{Y}_k| - \lambda_d(k)\big)$$

De plus, l'homme du métier appréciera que d'autres méthodes de calcul adaptées pour minimiser l'écart entre le modèle de bruit $\lambda_d(k)$ et le signal fréquentiel $\mathbf{Y}_k$ peuvent également être utilisées, dans d'autres modes de mise en oeuvre du procédé. En particulier, la méthode de calcul dite « de descente de gradient avec inertie » ou la méthode de calcul dite « méthode ADAM ».

La première de ces méthodes méthode consiste à :

- initialiser un nombre N de valeurs G(i), pour i compris entre 0 et *N-1*, telles que *G(i)* = 0 ;
- modifier, entre le calcul du modèle de bruit et la mise à jour des coefficients du filtre prédicteur (plus généralement la mise à jour du prédicteur du modèle de bruit), les valeurs *G(i)* suivant la formule :

$$G(i) = \beta \times G(i) + (1 - \beta) \times \sum_k O_k(i)\big(|\mathbf{Y}_k| - \lambda_d(k)\big)$$

où $\beta$ est un coefficient compris entre 0 et 1, par exemple $\beta$=0,9 ; et,
- mettre à jour des coefficients du filtre prédicteur suivant la formule :

$$P(i) = P(i) + \alpha \times G(i)$$

La seconde de ces méthodes est décrite dans l'article « Adam : A Method for Stochastic Optimization, » D.P. Kingma et J. Lei Ba, ICLR, 2015.

Lors de l'étape 107, la valeur des éléments des tableaux unidimensionnels $O_k(i)$ est modifiée, pour chaque fréquence *k*, de sorte que :

- pour tout indice *i*, en partant de *i = N-2* et ainsi de suite en descendant les valeurs d'indice jusqu'à *i = 0 : $O_k(i+1) = O_k(i)$* ; puis après,
- pour l'indice *i* de valeur nulle (i.e., pour *i=0) : $O_k(0) = |\mathbf{Y}_k|$*.

De cette façon, la dernière valeur (convertie dans le domaine fréquentiel) du signal sonore acquise est intégrée à l'historique dans le tableau $O_k(0)$ d'indice zéro et les autres valeurs déjà stockées sont conservées en étant simplement décalées du tableau $O_k$(i) d'indice i dans le tableau $O_k(i+1)$ d'indice *i+1,* bien entendu jusqu'à concurrence du N-ième tableau d'indice *N-1*. Dit autrement, l'historique est tenu à jour avec les N dernières valeurs acquises stockées dans les N tableaux $O_k(0)$ à $O_k(N-1)$, d'indice 0 à *N-1*, respectivement.

Cette mise à jour de valeurs stockées dans une mémoire du système de reconnaissance vocale peut être réalisée soit par un décalage physique des valeurs attribuées aux éléments des tableaux unidimensionnels $O_k(i)$, soit en utilisant un tampon mémoire circulaire (en anglais « *circular buffer* ») en sorte que l'historique peut être mis à jour sans les valeurs enregistrées en mémoire ne doivent être décalées physiquement. On épargne ainsi le temps et l'énergie nécessaires à des opérations d'écriture en mémoire.

L'étape 108 consiste à calculer, pour chaque fréquence d'indice k, une fonction $H_k$ de réponse d'un filtre (ou, simplement, réponse de filtre $H_k$), suivant la formule $H_k = C(Y_k)$, où C est une fonction de filtrage de bruit dépendante du modèle de bruit $\lambda_d(k)$. Cette fonction de filtrage peut, par exemple, être une fonction dénoyauteuse ou une fonction d'Ephraim et Malah telles que celles qui ont déjà été décrites en introduction. Ces exemples ne sont nullement limitatifs, d'autres fonctions pouvant être considérées en fonction des spécificités propres à chaque application.

L'étape 109 consiste à calculer le produit de convolution de la fonction $H_k$ avec le signal fréquentiel $Y_k$. Cette étape correspond à l'application concrète de la réponse du filtre obtenue grâce à la mise en oeuvre du procédé selon l'invention, au signal sonore acquis. Enfin, cette étape comprend aussi l'application au produit convolué d'une transformation de Fourrier inverse (ou IFFT, de l'anglais « *Inverse Fast Fourier Transform* ») pour obtenir la valeur du signal sonore filtré dans le domaine temporel.

L'étape finale 110 du procédé correspond ainsi à la délivrance du signal sonore filtré d'amplitude $\tilde{y}(t)$, à chaque instant *t.* Ce signal a donc été filtré par un filtre basé sur une fonction de filtrage utilisant un modèle de bruit établi à partir d'un historique des acquisitions précédentes. Autrement dit, la réactivité et la précision du filtrage sont améliorées grâce à la mise en oeuvre du procédé.

La figure 2 est un diagramme fonctionnel d'un dispositif comprenant des moyens pour la mise en oeuvre du procédé décrit ci-dessus, et la figure 3 montre schématiquement un exemple de produit électronique 200 comprenant un système de reconnaissance vocale 201 dans lequel le procédé décrit dans ce qui précède peut être mis en œuvre. Ce système 201 comprend au moins une unité de calcul 202 et une mémoire 203 qui peut être accédée en lecture et en écriture par l'unité de calcul, lesquelles peuvent réaliser toutes les étapes du procédé. Par exemple, toutes les valeurs et tableaux créées et modifiées au cours de l'exécution du procédé sont stockées dans la mémoire 203 et tous les calculs réalisés sur ces valeurs le sont par l'unité de calcul 202 du système 201.

La présente invention a été décrite et illustrée dans la présente description détaillée et dans les figures des dessins annexés, dans des formes de réalisation possibles. La présente invention ne se limite pas, toutefois, aux formes de réalisation présentées. D'autres variantes et modes de réalisation peuvent être déduits et mis en oeuvre par la personne du métier à la lecture de la présente description et des dessins annexés.

Dans les revendications, le terme "comprendre" ou "comporter" n'exclut pas d'autres éléments ou d'autres étapes. Un seul processeur ou plusieurs autres unités peuvent être utilisées pour mettre en oeuvre l'invention. Les signes de référence ne sauraient être compris comme limitant la portée de l'invention.

**Revendications**

1. Procédé de filtrage, par un système de reconnaissance vocale, d'un signal sonore d'amplitude $y(t)$ en fonction du temps $t$, dont des séquences de $M$ échantillons sont traitées successivement, où $M$ est un nombre entier strictement positif déterminé, ledit filtrage étant réalisé dans le domaine fréquentiel avec un filtre numérique de réponse $H_k$ donnée qui utilise une fonction d'un modèle de bruit $\lambda_d(k)$ modélisant un bruit ambiant acquis dans le signal sonore avec la voix à reconnaître, ledit modèle de bruit $\lambda_d(k)$ donnant l'amplitude moyenne du bruit ambiant pour chaque fréquence d'indice $k$ considérée, le procédé comprenant en outre :

   - la tenue à jour d'un historique de $N$ valeurs $\mathbf{Y}_k$ du signal sonore dans le domaine fréquentiel, pour $N$ blocs d'échantillons respectifs déjà traités du signal sonore, où $N$ est un nombre entier strictement positif déterminé, et pour chaque fréquence d'indice k considérée ; et,
   - la tenue à jour, à chaque traitement d'un bloc d'échantillons du signal sonore et avec un prédicteur, utilisant l'historique des valeurs $\mathbf{Y}_k$ du signal sonore dans le domaine fréquentiel, du modèle de bruit $\lambda_d(k)$ de façon à minimiser l'écart entre le modèle de bruit $\lambda_d(k)$ et l'amplitude $|\mathbf{Y}_k|$ du signal sonore dans le domaine fréquentiel.

2. Procédé de filtrage selon la revendication 1, dans lequel le filtrage du signal sonore comprend :

   a) l'initialisation (102) de tous les éléments d'un ensemble de $N$ tableaux unidimensionnels $O_k(i)$ comprenant chacun un nombre d'éléments déterminé, où i est un indice compris entre 0 et $N-1$ attribué auxdits $N$ tableaux unidimensionnels $O_k(i)$, respectivement,
   b) l'initialisation (103) de coefficients $P$, d'un filtre prédicteur réalisant le prédicteur du modèle de bruit $\lambda_d(k)$,
   c) l'acquisition (101) par le système de reconnaissance vocale, d'une séquence de M échantillons du signal sonore y(t) et l'application (104) d'une transformation de Fourier à ladite séquence de M échantillons du signal sonore de manière à obtenir une valeur $\mathbf{Y}_k$ du signal sonore dans le domaine fréquentiel pour chaque fréquence d'indice $k$ considérée ;

   puis, pour chaque fréquence d'indice k considérée :

   d) le calcul (105) de la fonction du modèle $\lambda_d(k)$ de bruit par un prédicteur utilisant les tableaux unidimensionnels $O_k(i)$ pondérés par les coefficients $P$ ; puis,
   e) la mise à jour (106), de la valeur des coefficients P du prédicteur, selon une méthode de calcul adaptée pour minimiser l'écart entre le modèle de bruit $\lambda_d(k)$ et la valeur $\mathbf{Y}_k$ du signal sonore dans le domaine fréquentiel ; et
   f) la mise à jour (107) de l'historique des $N$ valeurs du signal sonore avec la valeur $\mathbf{Y}_k$ du signal sonore dans le domaine fréquentiel ;
   g) le calcul (108) d'une fonction $H_k$ de réponse d'un filtre, selon la formule $H_k = C(Y_k)$ où $C$ est une fonction de filtrage de bruit dépendante du modèle de bruit $\lambda_d(k)$ ;
   h) le calcul (109) du produit de la fonction $H_k$ avec le signal fréquentiel $\mathbf{Y}_k$ ; et enfin,
   i) l'application (110) d'une transformation de Fourier inverse audit produit de manière à obtenir un signal, dit signal filtré, d'amplitude $\tilde{y}(t)$ à chaque instant $t$.

3. Procédé de filtrage selon la revendication 2, dans lequel la tenue à jour de l'historique de $N$ valeurs $\mathbf{Y}_k$ du signal sonore dans le domaine fréquentiel pour chaque fréquence d'indice k considérée comprend, à l'étape f) qui est réalisée successivement à chaque traitement d'un bloc respectif d'échantillons du signal sonore et pour chaque fréquence d'indice $k$ considérée, la mise à jour de la valeur des éléments des tableaux unidimensionnels $O_k(i)$ de telle sorte que :

- pour tout indice *i*, en partant de *i = N-2* et ainsi de suite en descendant les valeurs de l'indice *i* jusqu'à *i = 0*, $O_k(i+1) = O_k(i)$ ; puis après,
- pour l'indice i égal à zéro, $O_k(0) = |Y_k|$.

4. Procédé de filtrage selon la revendication 2 ou la revendication 3, dans lequel une première distribution mathématique est utilisée pour l'initialisation des coefficients *P* du filtre prédicteur, telle que *P(i) = 1/N*, où i est un indice compris entre 0 et *N-1* attribué à chaque coefficient, et telle que la somme des coefficients *P(i)* pour i compris entre 0 et *N-1* est égale à l'unité.

5. Procédé de filtrage selon la revendication 2 ou la revendication 3, dans lequel une seconde distribution mathématique est utilisée pour l'initialisation des coefficients *P* du filtre prédicteur, telle que $P(i) = Z \times q^i$, où *q* est une valeur comprise entre 0 et 1 et où $Z = (1-q)/(1-q^N)$, et telle que la somme des coefficients *P(i)* pour *i* compris entre 0 et *N-1* est égale à l'unité.

6. Procédé de filtrage selon l'une quelconque des revendications 2 à 5, dans lequel le nombre M d'échantillons dans une séquence temporelle est une puissance de 2.

7. Procédé de filtrage selon l'une quelconque des revendications 2 à 6, dans lequel, la fonction $\lambda_d(k)$ du modèle de bruit est obtenue pour chaque fréquence d'indice k considérée par application de la formule

$$\lambda_d(k) = \sum_{i=i_0}^{N-1} P(i) \times O_k(i)$$ , où $i_0$ est égal à zéro.

8. Procédé de filtrage selon l'une quelconque des revendications 2 à 6, dans lequel, la fonction $\lambda_d(k)$ du modèle de bruit est obtenue pour chaque fréquence d'indice *k* considérée par application de la formule

$$\lambda_d(k) = \sum_{i=i_0}^{N-1} P(i) \times O_k(i)$$ , où $i_0$ est compris entre 1 et *N*-1.

9. Procédé de filtrage selon l'une quelconque des revendications 2 à 8, dans lequel les coefficients P définissant le filtre prédicteur du modèle de bruit $\lambda_d(k)$ sont des coefficients $P_k$ dépendant de la fréquence.

10. Procédé de filtrage selon l'une quelconque des revendications précédentes, dans lequel, à la place des étapes b), d) et e), la fonction $\lambda_d(k)$ du modèle de bruit est obtenue pour chaque fréquence d'indice *k* considérée, par une méthode de calcul appliquant un réseau de neurones adapté pour utiliser les tableaux $O_k(i)$ comme entrée et pour générer en sortie la fonction $\lambda_d(k)$ en utilisant et en mettant à jour des coefficients P du réseau de neurones.

11. Procédé de filtrage selon la revendication 10, dans lequel le réseau de neurones est adapté pour n'utiliser uniquement que les tableaux $O_k(i)$ pour tout *i* supérieur à une valeur non nulle déterminée.

12. Procédé de filtrage selon l'une quelconque des revendications 2 à 8, dans lequel, à l'étape e), la modification de la valeur des coefficients P(i) est réalisée selon une méthode de calcul appliquant la formule :

$$P(i) = P(i) + \alpha \times \sum_k O_k(i)\big(|Y_k| - \lambda_d(k)\big)$$

où $\alpha$ est un nombre réel compris entre 0 et 1.

13. Procédé de filtrage selon l'une quelconque des revendications 2 à 9, dans lequel, à l'étape e), la mise à jour de la valeur des coefficients P est réalisée selon une méthode de calcul dite de descente de gradient avec inertie, ou selon une méthode de calcul dite méthode ADAM.

14. Procédé de filtrage selon l'une quelconque des revendications 2 à 13, dans lequel, à l'étape f), la mise à jour des N tableaux unidimensionnels $O_k(i)$ est réalisée, dans une mémoire du système de reconnaissance vocale, par utilisation d'un tampon mémoire circulaire.

15. Procédé de filtrage selon l'une quelconque des revendications 2 à 14, dans lequel, lors de l'étape g), la fonction Cde filtrage de bruit est une fonction dite dénoyauteuse, ou une fonction dite d'Ephraim et Malah.

**16.** Système de reconnaissance vocale (201) comprenant au moins une unité de calcul (202) et une mémoire (203) configurées pour mettre en oeuvre toutes les étapes du procédé de filtrage selon l'une quelconque des revendications 1 à 15.

**17.** Equipement électronique (200) comprenant un système de reconnaissance vocale selon la revendication 16.

**18.** Programme d'ordinateur comprenant des instructions qui, lorsque le programme d'ordinateur est chargé dans la mémoire d'un ordinateur et est exécuté par un processeur dudit ordinateur, causent la mise en œuvre par l'ordinateur de toutes les étapes du procédé selon l'une quelconque des revendications 1 à 15.

**19.** Support d'enregistrement tangible, lisible par un ordinateur, sur lequel est enregistré de manière non-transitoire le programme selon la revendication 18.

**Patentansprüche**

**1.** Verfahren zur Filterung eines Tonsignals mit der Amplitude $y(t)$ in Abhängigkeit zu der Zeit $t$ mittels eines Spracherkennungssystems, wobei Zeitsequenzen von $M$ Abtastwerten nacheinander verarbeitetet werden, wobei $M$ eine bestimmte streng positive Ganzzahl ist, wobei die Filterung im Frequenzbereich mittels eines digitalen Filters mit einer gegebenen Antwort $H_k$ durchgeführt wird, das eine Funktion eines Rauschmodells $\lambda_d(k)$ verwendet, welches ein Hintergrundrauschen modelliert, das in dem Tonsignal mit der zu erkennenden Stimme erfasst wird, wobei das Rauschmodell $\lambda_d(k)$ die mittlere Amplitude des Hintergrundrauschens für jede betrachtete Frequenz mit dem Index $k$ angibt, wobei das Verfahren ferner die Schritte umfasst, dass:

- eine Historie von $N$ Werten $Y_k$ des Tonsignals im Frequenzbereich für entsprechende $N$ Blöcke von bereits verarbeiteten Abtastwerten des Tonsignals und für jede betrachtete Frequenz mit dem Index $k$ aktuell gehalten wird, wobei $N$ eine bestimmte, streng positive Ganzzahl ist; und
- bei jeder Verarbeitung eines Blocks von Abtastwerten des Tonsignals mittels eines Prädiktors und unter Rückgriff auf die Historie der Werte $Y_k$ des Tonsignals im Frequenzbereich das Rauschmodell $\lambda_d(k)$ aktuell gehalten wird, sodass die Abweichung zwischen dem Rauschmodell $\lambda_d(k)$ und der Amplitude $|Y_K|$ des Tonsignals im Frequenzbereich minimiert wird.

**2.** Verfahren nach Anspruch 1, wobei die Filterung des Tonsignals umfasst, dass:

a) alle Elemente eines Satzes von N eindimensionalen Arrays $O_k(i)$, die jeweils eine bestimmte Anzahl von Elementen umfassen, initialisiert (102) werden, wobei $i$ ein Index zwischen 0 und $N-1$ ist, der jeweils den genannten eindimensionalen Arrays $O_k(i)$ zugewiesen wird,
b) Koeffizienten P eines Prädiktorfilters initialisiert (103) werden, durch die der Prädiktor des Rauschmodells $\lambda_d(k)$ umgesetzt wird,
c) eine Sequenz von M Abtastwerten des Tonsignals y(t) durch das Spracherkennungssystem erfasst (101) wird und eine Fourier-Transformation auf die Sequenz von M Abtastwerten des Tonsignals angewendet (104) wird, um für jede betrachtete Frequenz mit dem Index $k$ einen Wert $Y_k$ des Tonsignals in dem Frequenzbereich zu erhalten;

dass ferner für jede betrachtete Frequenz mit dem Index $k$ :

d) die Funktion des Rauschmodells $\lambda_d(k)$ durch einen Prädiktor unter Verwendung der mit den Koeffizienten P gewichteten eindimensionalen Arrays $O_k(i)$ berechnet (105) wird; ferner dass,
e) der Wert der Koeffizienten P des Prädiktors gemäß einem Berechnungsverfahren, das dafür angepasst ist, die Abweichung zwischen dem Rauschmodell $\lambda_d(k)$ und dem Wert $Y_k$ des Tonsignals im Frequenzbereich zu minimieren, aktualisiert (106) wird; und dass
f) die Historie der $N$ Werte des Tonsignals mit dem Wert $Y_k$ des Tonsignals im Frequenzbereich aktualisiert (107) wird;
g) eine Ansprechfunktion $H_k$ eines Filters gemäß der Formel $H_k = C(Y_k)$ berechnet (108) wird, wobei C eine von dem Rauschmodell abhängige Rauschfilterfunktion $\lambda_d(k)$ ist;
h) das Produkt der Funktion $H_k$ mit dem Frequenzsignal $Y_k$ berechnet (109) wird; und schließlich, dass
i) eine inverse Fourier-Transformation auf das Produkt angewendet (110) wird, um zu jedem Zeitpunkt $t$ ein Signal mit der Amplitude $y(t)$, das sogenannte gefilterte Signal, zu erhalten.

3. Filterverfahren nach Anspruch 2, wobei das Aktuellhalten der Historie von $N$ Werten $Y_k$ des Tonsignals im Frequenzbereich für jede betrachtete Frequenz mit dem Index k umfasst, dass in Schritt f), der im Anschluss an jede Verarbeitung eines jeweiligen Blocks von Tonsignal-Abtastwerten und für jede betrachtete Frequenz mit dem Index k durchgeführt wird, der Wert der Elemente der eindimensionalen Arrays $O_k(i)$ aktualisiert wird, sodass:

- für jeden Index $i$, beginnend mit $i = N$-2 und so weiter, wobei die Werte für den Index $i$ bis zum Erreichen von $i = 0$ heruntergezählt werden, $O_k(i+1) = O_k(i)$; ferner
- für den Index i gleich null, $O_k(0) = |Y_k|$.

4. Filterverfahren nach Anspruch 2 oder nach Anspruch 3, wobei eine erste mathematische Verteilung zur Initialisierung der Koeffizienten $P$ des Prädiktorfilters verwendet wird, etwa derart, dass $P(i) = 1/N$, wobei i ein Index zwischen 0 und $N$-1 ist, der jedem Koeffizienten zugeordnet wird, und derart, dass die Summe der Koeffizienten $P(i)$ für jedes i zwischen 0 und $N$-1 gleich eins ist.

5. Filterverfahren nach Anspruch 2 oder nach Anspruch 3, wobei eine zweite mathematische Verteilung zur Initialisierung der Koeffizienten $P$ des Prädiktorfilters verwendet wird, etwa derart, dass $P(i) = Z \times q^i$, wobei q ein Wert zwischen 0 und 1 ist, und wobei $Z = (1-q)/(1-q^N)$, und derart, dass die Summe der Koeffizienten $P(i)$ für jedes i zwischen 0 und $N$-1 gleich eins ist.

6. Filterverfahren nach einem der Ansprüche 2 bis 5, wobei die Anzahl M der Abtastwerte in einer Zeitsequenz eine Potenz von 2 ist.

7. Filterverfahren nach einem der Ansprüche 2 bis 6, wobei die Funktion $\lambda_d(k)$ des Rauschmodells für jede betrachtete Frequenz mit dem Index $k$ unter Anwendung der Formel $\lambda_d(k) = \sum_{i=i_0}^{N-1} P(i) \times O_k(i)$ gewonnen wird, wobei $i_0$ gleich Null ist.

8. Filterverfahren nach einem der Ansprüche 2 bis 6, wobei die Funktion $\lambda_d(k)$ des Rauschmodells für jede betrachtete Frequenz mit dem Index k unter Anwendung der Formel $\lambda_d(k) = \sum_{i=i_0}^{N-1} P(i) \times O_k(i)$ gewonnen wird, wobei $i_0$ zwischen 1 und $N$-1 liegt.

9. Filterverfahren nach einem der Ansprüche 2 bis 8, wobei es sich bei den Koeffizienten P, die den Prädiktorfilter des Rauschmodells $\lambda_d(k)$ definieren, um frequenzabhängige Koeffizienten $P_k$ handelt.

10. Filterverfahren nach einem der vorhergehenden Ansprüche, wobei anstelle der Schritte b), d) und e) die Funktion $\lambda_d(k)$ des Rauschmodells für jede betrachtete Frequenz mit dem Index k durch ein Berechnungsverfahren unter Anwendung eines neuronalen Netzes gewonnen wird, das dafür angepasst ist, die Arrays $O_k(i)$ als Eingabe zu verwenden und als Ausgabe die Funktion $\lambda_d(k)$ zu erzeugen, indem jeweils Koeffizienten P des neuronalen Netzes verwendet und aktualisiert werden.

11. Filterverfahren nach Anspruch 10, wobei das neuronale Netz dafür angepasst ist, dass nur die Arrays $O_k(i)$ für jedes $i$, das größer als ein bestimmter Wert ungleich Null ist, verwendet werden.

12. Filterverfahren nach einem der Ansprüche 2 bis 8, wobei in Schritt e) die Änderung des Wertes der Koeffizienten P(i) gemäß einem Berechnungsverfahren erfolgt, das die folgende Formel anwendet:

$$P(i) = P(i) + \alpha \times \sum_k O_k(i)\big(|Y_k| - \lambda_d(k)\big)$$

wobei $\alpha$ eine reelle Zahl zwischen 0 und 1 ist.

13. Filterverfahren nach einem der Ansprüche 2 bis 9, wobei in Schritt e) die Aktualisierung des Wertes der Koeffizienten P gemäß einer Berechnungsmethode, die als Gradientenabstieg mit Trägheit bezeichnet wird, oder gemäß einer Berechnungsmethode, die als ADAM-Verfahren bezeichnet wird, erfolgt.

**14.** Filterverfahren nach einem der Ansprüche 2 bis 13, wobei in Schritt f) die Aktualisierung der N eindimensionalen Arrays $O_k(i)$ in einem Speicher des Spracherkennungssystems unter Verwendung eines Ringspeicherpuffers durchgeführt wird.

**15.** Filterverfahren nach einem der Ansprüche 2 bis 14, wobei in Schritt g) die Rauschfilterfunktion C eine sogenannte Entkernungsfunktion oder eine sogenannte Ephraim-Malah-Funktion ist.

**16.** Spracherkennungssystem (201), das zumindest eine Recheneinheit (202) und einen Speicher (203) umfasst, die so konfiguriert sind, dass sie alle Schritte des Filterverfahrens nach einem der Ansprüche 1 bis 15 ausführen.

**17.** Elektronisches Gerät (200), das ein Spracherkennungssystem nach Anspruch 16 umfasst.

**18.** Computerprogramm, das Befehle umfasst, die, wenn das Computerprogramm in den Speicher eines Computers geladen und von einem Prozessor des Computers ausgeführt wird, den Computer dazu veranlassen, alle Schritte des Verfahrens nach einem der Ansprüche 1 bis 15 auszuführen.

**19.** Physisches, computerlesbares Aufzeichnungsmedium, auf welchem das Programm nach Anspruch 18 nichttransitorisch gespeichert ist.

**Claims**

**1.** Method for filtering, by a voice recognition system, a sound signal of amplitude $y(t)$ as a function of time $t$, of which sequences of $M$ samples are processed successively, where $M$ is a given strictly positive whole number, said filtering being carried out in the frequency domain with a given digital response filter $H_k$ which uses a function of a noise model $\lambda_d(k)$ modelling an ambient noise acquired in the sound signal with the voice to recognise, said noise model $\lambda_d(k)$ giving the average amplitude of the ambient noise for each considered frequency of index $k$, the method being **characterized in that** it further includes:

- the keeping up to date of a history of $N$ values $Y_k$ of the sound signal in the frequency domain, for $N$ blocks of already processed respective samples of the sound signal, where $N$ is a given strictly positive whole number, and for each considered frequency of index $k$; and,
- the keeping up to date, at each processing, of a block of samples of the sound signal and with a predictor, using the history of values $Y_k$ of the sound signal in the frequency domain, of the noise model $\lambda_d(k)$ so as to minimise the difference between the noise model $\lambda_d(k)$ and the amplitude $|Y_k|$ in the frequency domain of the sound signal.

**2.** Method for filtering according to claim 1, wherein the filtering of the sound signal includes:

a) the initialisation (102) of all the elements of a set of $N$ unidimensional tables $O_k(i)$ each including a determined number of elements, where i is an index comprised between 0 and $N-1$ attributed to said $N$ unidimensional tables $O_k(i)$, respectively;
b) the initialisation (103) of coefficients $P$, of a predictive filter forming the predictor of the noise model $\lambda_d(k)$,
c) the acquisition (101), by the voice recognition system, of a sequence of M samples of the sound signal $y(t)$ and the application (104) of a Fourier transform to said sequence of M samples of the sound signal in such a way as to obtain a value $Y_k$ of the sound signal in the frequency domain for each considered frequency of index $k$;

then, for each considered frequency of index $k$:

d) the calculation (105) of the function of the noise model $\lambda_d(k)$ by a predictor using the unidimensional tables $O_k(i)$ weighted by the coefficients $P$; then,
e) the updating (106), of the value of the coefficients P of the predictor, according to a calculation method suited to minimising the difference between the noise model $\lambda_d(k)$ and the value $Y_k$ in the frequency domain | of the sound signal; and
f) the updating (107) of the history of the $N$ values of the sound signal with the value $Y_k$ of the sound signal in the frequency domain;
g) the calculation (108) of a function $H_k$ of the response of a filter, according to the formula $H_k = C(Y_k)$ where $C$ is a noise filtering function dependent on the noise model $\lambda_d(k)$;

h) the calculation (109) of the product of the function $H_k$ with the frequency signal $\mathbf{Y}_k$;
and finally,
i) the application (110) of an inverse Fourier transform to said product in such a way as to obtain a signal, designated filtered signal, of amplitude $\tilde{y}(t)$ at each instant $t$.

3. Method for filtering according to claim 2, wherein the keeping up to date of the history of $N$ values $\mathbf{Y}_k$ of the sound signal in the frequency domain for each considered frequency of index k includes, at step f) which is carried out successively at each processing of a respective block of samples of the sound signal and for each considered frequency of index $k$, the updating of the value of the elements of the unidimensional tables $O_k(i)$ in such a way that:

- for any index $i$, starting from $i = N\text{-}2$ and so on while lowering the values of the index $i$ up to $i = 0$, $O_k(i+1) = O_k(i)$; then after,
- for the index i equal to zero, $O_k(0) = |\mathbf{Y}_k|$.

4. Method for filtering according to claim 2 or claim 3, wherein a first mathematical distribution is used for the initialisation of the coefficients $P$ of the predictive filter, such that $P(i) = 1/N$, where i is an index comprised between 0 and $N\text{-}1$ attributed to each coefficient, and such that the sum of the coefficients $P(i)$ for i comprised between 0 and $N\text{-}1$ is equal to one.

5. Method for filtering according to claim 2 or claim 3, wherein a second mathematical distribution is used for the initialisation of the coefficients P of the predictive filter, such that $P(i) = Z \times q^i$, where q is a value comprised between 0 and 1 and where $Z = (1\text{-}q)/(1\text{-}q^N)$, and such that the sum of the coefficients $P(i)$ for $i$ comprised between 0 and $N\text{-}1$ is equal to one.

6. Method for filtering according to any of claims 2 to 5, wherein M is a power of 2.

7. Method for filtering according to any of claims 2 to 6, wherein the function $\lambda_d(k)$ of the noise model is obtained for each considered frequency of index $k$ by application of the formula $\lambda_d(k) = \sum_{i=i_0}^{N-1} P(i) \times O_k(i)$, where $i_0$ is equal to zero.

8. Method for filtering according to any of claims 2 to 6, wherein the function $\lambda_d(k)$ of the noise model is obtained for each considered frequency of index $k$ by application of the formula $\lambda_d(k) = \sum_{i=i_0}^{N-1} P(i) \times O_k(i)$, where $i_0$ is comprised between 1 and $N\text{-}1$.

9. Method for filtering according to any of claims 2 to 8, wherein the coefficients P defining the predictive filter of the noise model $\lambda_d(k)$ are frequency dependent coefficients $P_k$.

10. Method for filtering according to any of the preceding claims, wherein, instead of steps b), d) and e), the function $\lambda_d(k)$ of the noise model is obtained for each considered frequency of index k by a calculation method applying a neural network suitable for using the tables $O_k(i)$ as input and for generating at output the function $\lambda_d(k)$ by using and by updating the coefficients P of the neural network.

11. Method for filtering according to claim 10, wherein the neural network is suitable for only using the tables $O_k(i)$ for any $i$ greater than a determined non-zero value.

12. Method for filtering according to any of claims 2 to 8, wherein, at step e), the modification of the value of the coefficients P(i) is carried out according to a calculation method applying the formula:

$$P(i) = P(i) + \alpha \times \sum_k O_k(i)\big(|\mathbf{Y}_k| - \lambda_d(k)\big)$$

where $\alpha$ is a real number comprised between 0 and 1.

13. Method for filtering according to any of claims 2 to 9, wherein, at step e), the updating of the value of the coefficients P is carried out according to a so-called gradient descent with momentum calculation method, or according to a so-called ADAM calculation method.

14. Method for filtering according to any of claims 2 to 13, wherein, at step f), the updating of the N unidimensional tables $O_k(i)$ is carried out, in a memory of the voice recognition system, by use of a circular memory buffer.

15. Method for filtering according to any of claims 2 to 14, wherein, during step g), the noise filtering function C is a so-called coring function, or a so-called Ephraim-Malah function.

16. Voice recognition system (201) including at least a calculation unit (202) and a memory (203) **characterized in that** it is configured to implement all the steps of the method for filtering according to any of claims 1 to 15.

17. Electronic equipment (200) including a voice recognition system according to claim 16.

18. Computer program comprising instructions which, when the computer program is loaded into the memory of a computer and executed by a processor of said computer, cause the computer to carry out all of the steps of the method according to any one of claims 1 to 15.

19. Tangible recording support, readable by a computer, on which is recorded in a non-transitory manner the program according to claim 18.

**FIG.1**

**FIG.2**

**FIG.3**

## RÉFÉRENCES CITÉES DANS LA DESCRIPTION

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- WO 2017218386 A

**Littérature non-brevet citée dans la description**

- **Y. EPHRAIM ; D. MALAH.** Speech enhancement using a minimum mean-square error short-time spectral amplitude estimator. *IEEE Transactions on Acoustics, Speech, and Signal Processing,* Décembre 1984, vol. ASSP-32 (6), 1109-1121
- **P.J. WOLFE ; S.J. GODSILL.** Simple alternatives to the Ephraim and Malah suppression rule for speech enhancement. *IEEE Workshop on Statistical Signal Processing,* 2001, 496-499
- **BABAFEMI O. ODELOWO et al.** A noise prédiction and time-domain subtraction approach to deep neural network based speech enhancement. *16th IEEE International Conférence on Machine Learning and Applications (ICMLA),* 18 Décembre 2017
- **LI XIAOFEI et al.** Non-stationary noise power spectral density estimation based on régional statistics. *IEEE International Conférence on Acoustics, Speech and Signal Processing,* 20 Mars 2016
- **HENDRIKS R C et al.** Noise tracking using DFT domain subspace décompositions. *IEEE Transactions on Audio, Speech and Language processing,* 12 Février 2008
- **COHEN I.** Noise spectrum estimation in adverse environments : improved minima controlled recursive averaging. *IEEE Transactions on Speech and Audio processing,* 26 Août 2003
- **D.P. KINGMA ; J. LEI BA.** Adam : A Method for Stochastic Optimization,. ICLR, 2015